Europäisches Patentamt

European Patent Office

Office européen des brevets

(11) Publication number: **0 323 703**
**A2**

## EUROPEAN PATENT APPLICATION

(21) Application number: **88311049.6**

(51) Int. Cl.⁴: **G06F 15/21**

(22) Date of filing: **23.11.88**

(30) Priority: **18.12.87 US 136254**

(43) Date of publication of application:
**12.07.89 Bulletin 89/28**

(84) Designated Contracting States:
**DE FR GB**

(71) Applicant: **International Business Machines Corporation**
**Old Orchard Road**
**Armonk, N.Y. 10504(US)**

(72) Inventor: **Scully, Keith James**
**9204 Quail Wood Drive**
**Austin Texas 78758(US)**
Inventor: **Singh, Harinder S.**
**P.O. Box 13202, RTP.**
**North Carolina 27709-3202(US)**

(74) Representative: **Grant, Iain Murray**
**IBM United Kingdom Limited Intellectual**
**Property Department Hursley Park**
**Winchester Hampshire SO21 2JN(GB)**

(54) **Interrogating electronic calendars.**

(57) A method of exchanging date and time slot usage between calendar users is disclosed. A date and time map structure is configured in a common way to allow the accessing of the map information using an algorithm and then responding to the provided information. The response would normally be to create a composite calendar for purposes of determining which time slots are not used for selected calendars to assist when establishing a group meeting. The structure supports specifying calendar categories, time span and granularity for the times represented by the used time slots in the map.

FIG. 6

EP 0 323 703 A2

## INTERROGATING ELECTRONIC CALENDARS

This invention relates in general to interrogating electronic calendars and is closely related to a sister application EP-A- of the same effective date, with which it shares much descriptive material, both providing advances on the arrangements disclosed in EP-A-0 276 427.

The prior art has disclosed a number and variety of interactive electronic calendaring systems and methods. The objective of all of these systems is primarily to assist the person who, for a number of different reasons, maintains a calendar of future events containing various information about the event at entry points on the calendar which relate to the time of the event.

The increase of personal computers and intelligent workstations in recent years has made it possible for calendar owners to establish and maintain their calendars on these interactive type data processing systems. Hence, the term "electronic calendaring."

Two general types of interactive electronic calendaring systems have thus evolved in the art. In one type of calendaring system, the owner of the calendar is generally also the user of the workstation and that workstation is generally not a part of a larger network. Generally, in these types of systems, the calendar functions involve presenting a screen to the user representing a day calendar divided into a number of time periods or time slots. Each period is capable of displaying a limited amount of text that the user enters. In some systems, the day calendar can scroll vertically to present more time periods to the user or horizontally to present longer text entries. The operator can generally "page" forward or backward and, in most arrangements, can display a requested date. These calendaring methods generally do not limit the type of event that is calendared nor the terminology employed at any of the entry points and, to that extent, function in the same manner as conventional manual calendars or appointment books. The electronic calendaring method and systems do have an advantage over the prior art manual calendaring of events in that the user generally has the ability to scan a time span involving a large number of days and identify calendared events quite rapidly.

The other type of calendaring arrangement that has developed in the prior art involves multi-user environments having a large number of terminals or workstations which are generally part of a larger communication network. Usually these networks have been established to permit the users to interact with each other and with data maintained on the system. In this environment, a user at a terminal or workstation can send a message to one or more of the other users on the network concurrently, and is notified when the addressees have received and read the message. In most of these environments, each user generally maintains a calendar, and in many of these environments the reason for having a network in which users interact, quite often involves user interaction that requires reference to the respective electronic calendars of the users. A considerable amount of time is therefore spent by calendar users in many organisations, with people checking and rearranging their calendars to accommodate various events such as meetings and presentations. Calendar systems have progressed to the point where a person who is calling a meeting can at least view the calendars of a number of users that he intends to invite to a meeting, in order to determine a common available time for the meeting.

In this prior art system, a screen is presented to the meeting originator which requests the data necessary for the system to determine times that all potential attendees would be available. The data requested includes, for example, the length of the meeting, a time period during which the meeting should be conducted, the place of the meeting and the names of the attendees. Based on this data, the method returns a screen of available times after inspecting each attendee's day calendar during the time period for free time slots or periods.

The originator then selects the beginning time and end time of the meeting, including the time and date, and invitations are automatically sent to all the attendees, requesting their attendance at the scheduled meeting.

While such an automatic system saves time in finding a convenient meeting time, relative to the manual process, the process is limited to the scheduling of meetings based on "free time" as represented by the absence of a calendar entry on each of the inspected calendars. This approach does not recognise that some calendar entries are less important than others and, in practice, it is often impossible to find a common period of "free time" for a meeting that involves a large group of people or a meeting involving a number of people whose work requires a large number of meetings.

The prior art systems are limited to examining calendars of others in connection with setting up a meeting. It was soon recognised that there were other situations besides calling a meeting where it would be beneficial to be able to create a "selected view" of a number of individual calendars.

A department manager, for example, may have an assignment that can be given to a number of different people in his department. If the calendaring system could display to the manager the calendared events of each of these people which meet a set of search criteria entered into this system interactively by the manager, considerable time and effort could be saved by everyone involved. While time available or free time may be one of the search criteria entered, other criteria such as the relative importance of the events that are calendared to the new assignment, might also provide the manager with more relevant data than just free time. Also, identifying the person who handled the same or similar assignment in the past, similar assignments scheduled in the future or other assignments scheduled at the same geographic location or customer could be important criteria for the manager to employ. These deficiencies of the prior art electronic calendaring methods, namely using only free time to find relevant calendar entries, are overcome by the present invention.

The present invention provides a method of interrogating electronic calendars in a data processing system which supports an application program driven user interface and a potential plurality of calendars, the method being driven by a calendar interrogation application program and comprising:

in response to the invocation of the calendar interrogation program, presenting at the user interface a choice of interrogation formats;

in response to the choosing of one of the presented formats, presenting at the user interface a choice of calendar parameters to be involved in the interrogation and a choice of the time granularity under which the interrogation is to take place;

in response to the selection of parameters and granularity, automatically compiling an interrogation request appropriate to the format, parameters and granularity to each supported calendar;

in response to the execution of the interrogation requests, accumulating the response data into the selected format to form a composite calendar structure and presenting the same at the user interface.

By way of example, there is disclosed hereinafter, a method of generating a composite calendar in which a calendar owner can request the system to display or print out a selected subset of calendar entries from a plurality of calendars maintained by the electronic calendaring system. The method assists the calendar owner in defining the selected subset by presenting to him a "view select" screen containing various prompts to which he responds by keying in the search criteria that he wishes to employ, to determine if a calendar entry belongs to the subset. The subset is then displayed in one or more composite screens using a time granularity specified by the owner.

The present invention will be described further by way of example with reference to the embodiment as illustrated in the accompanying drawings in which:

Fig. 1 illustrates an interactive workstation;

Fig. 2 illustrates a network of interactive workstations of the type shown in Fig. 1;

Fig. 3 illustrates the structure of a calendar object;

Figs. 4a through 4c illustrate structures of calendar triplets which are employed by the calendar object of Fig. 3;

Figs.5a through 5d are screens presented to a calendar owner to assist in defining criteria to be used by the system in selecting calendar entries during a view select function; and

Fig. 6 a flow chart, illustrating the detailed steps of the interrogation method of the embodiment.

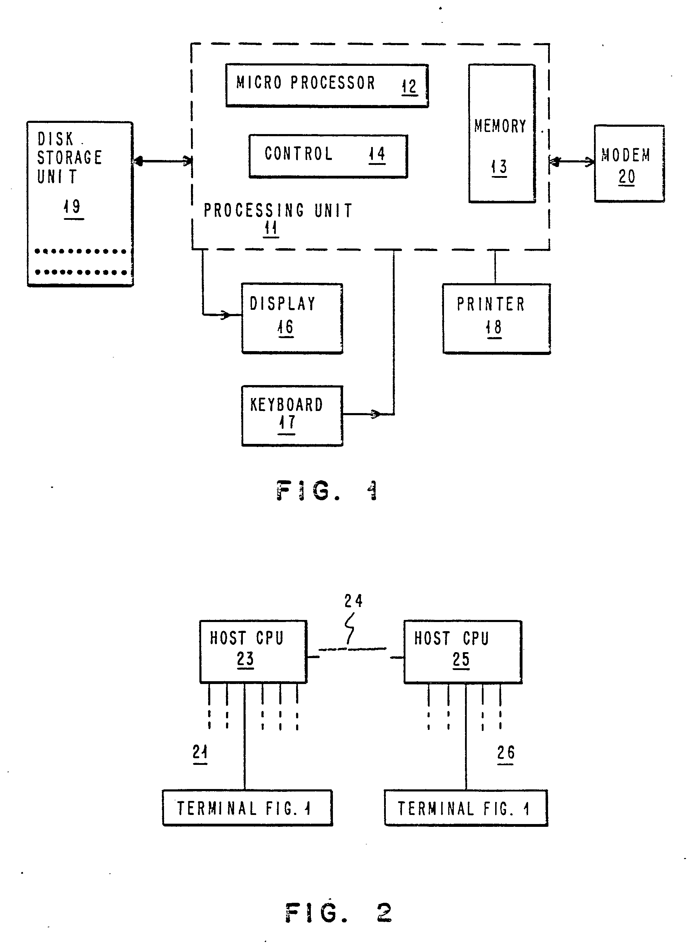

Fig. 1 illustrates the functional components of an interactive type data processing terminal on which the electronic calendaring method of the present invention may be advantageously employed. The terminal comprises a processing unit 11 which includes a microprocessor block 12, a semiconductor memory 13, and a control block 14 which functions to control input/output operations in addition to the interaction between the micro-processor block 12 and the memory unit 13.

The terminal further includes a group of conventional peripheral units including a display device 16, a keyboard 17, a printer 18, a disk storage unit 19, and a modem 20. Since the details of the above-described functional blocks form no part of the present invention and can be found in the prior art, only a brief functional description of each block is set forth, along with a description of their interactions, sufficient to provide a person of ordinary skill in the art with a basis of understanding applicants' improved electronic calendaring method.

Processing unit 11 corresponds to the "system unit" of a personal computer system such as the IBM XT or IBM AT type systems. Unit 11 is provided with an operating system program which may be one of the many versions of DOS (Disk Operating System) which is normally employed to run the systems. The operating system program is stored in memory 13 along with one or more application programs that the user has selected to run. Depending on the capacity of memory 13 and the size of the application programs, portions of these programs, as needed, may be transferred to memory 13 from the disk storage unit 19 which may include, for example, a 30 megabyte hard disk drive and a diskette drive. The basic

3

function of the disk storage unit is to store programs and data that are employed by the system and which may readily be transferred to the memory unit 13 when needed. The function of the diskette drive is to provide a removable storage function for entering programs and data into the system, and a vehicle for storing data in a form that is readily transportable for use on other terminals or systems.

Display device 16 and keyboard 17 together provide for the interactive nature of the terminal, in that in normal operation, the interpretation that the system gives to a specific keystroke by the operator depends, in substantially all situations, on what is being displayed to the operator at that point in time.

In some situations, the operator, by entering commands into the system, causes the system to perform a certain function. In other situations, the system requests the entry of certain data, generally by displaying a prompt type of menu/message screen. The depth of the interaction between the operator and the system varies by the type of operating system and the application program, but is a necessary characteristic of terminals on which the method of the present invention may be employed.

The terminal shown in Fig. 1 further includes a printer 18, which functions to provide hard copy output of data developed or stored in the terminal. Lastly, the modem 20 functions to transfer data from the terminal of Fig. 1 to a host system through one or more communication links which may be a commercial type link or a dedicated communication link.

Fig. 2 illustrates a first information processing system which includes a network 21 of interactive type workstations of the type shown in Fig. 1. As illustrated, the network 21 includes a plurality of terminals which are interconnected with each other and to a host central processing unit 23. The information processing system is connected via communication link 24 to a second information processing system which includes a host processing unit 25 and a network 26 of interactive workstations. Functionally, the each of the systems operates to allow one terminal to communicate to one or more other terminals using established communication protocols, so that the various serially connected communication links are transparent to the operator. Such systems are well known in the art, and are currently in extensive commercial use. Since these communication links per se are not part of the present invention, only those details that are necessary for an understanding of the calendaring method of the present invention will be described. It should therefore be assumed in the following description, that each workstation on the network has a system node address and a "post office" address, and that to simplify the description, there is only one individual assigned to each node on the network. It should further be assumed that conventional communication services are provided by the system, such as directory listings of individual calendar owners and shared resources such as meeting rooms, etc., which require scheduling.

The system shown in Fig. 2 processes information as various types of data objects such as text data objects, graphic data objects, and calendar data objects. Each of these data objects are represented by a datastream which comprises a series of structured fields.

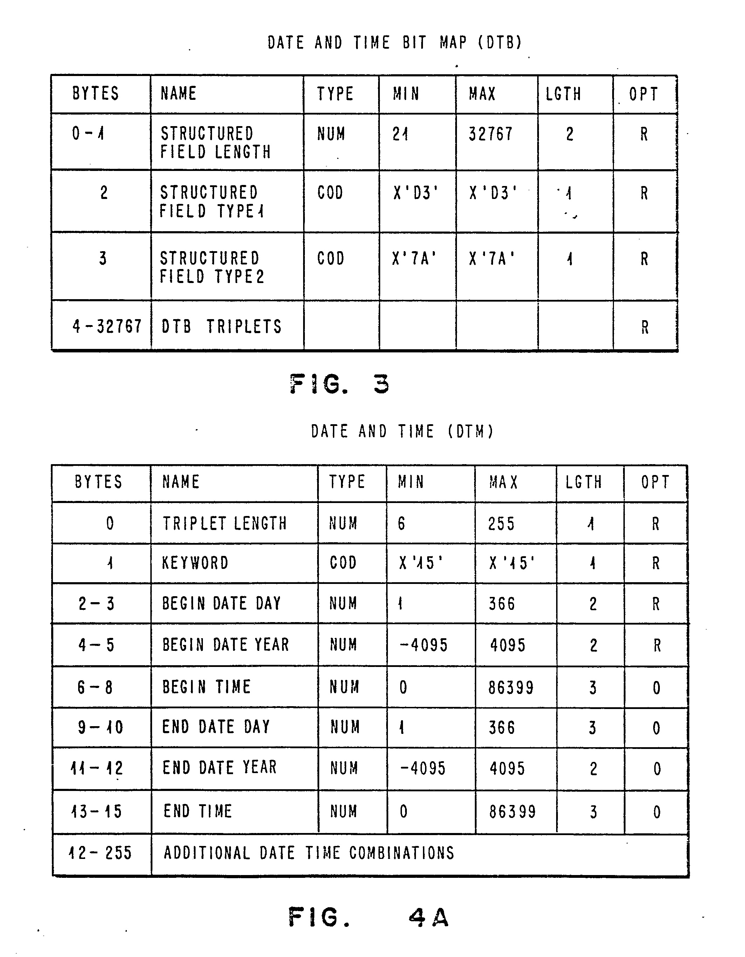

Fig. 3 shows a Date and Time Bit Map (DTB) which is a calendar structure which is required by the present invention to generate a composite calendar. The DTB structure provides an efficient way to pass date and time slot usage between calendar users for use in building the composite calendar. The DTB includes the following calendar triplets: a Date and Time (DTM) triplet, a Entry Status (EST) triplet and a Bit Map (BMP) triplet.

Fig. 4a shows the structure of the DTM triplet. The DTM triplet specifies the dates and times for the associated triplets in the calendar structured field. Date is specified as a combination of two two-byte parameters (day of the year and year). Time is in seconds beginning at midnight. Each DTM triplet requires one begin time and one begin date. The begin and end, date and time sequence may be repeated if additional begin and end date and begin and end times are needed. If the number of dates and times exceed the number which can be transmitted in one DTM triplet, additional DTM triplets may be included the Calendar Structured Field. The only restriction is byte structure length.

DTM Parameters

- BEGIN DATE DAY: The day of the year when the event begins.
- BEGIN DATE YEAR: The year the event begins.
- BEGIN TIME: The event start time in seconds.
- END DATE DAY: The day of the year when the event ends.
- END DATE YEAR: The year the event ends.
- END TIME: The event stop time in seconds.

Fig. 4b shows the structure of the EST triplet. The EST triplet provides a specific status code for unavailable time and for open time on a calendar.

A STATUS parameter in the EST triplet is a two-byte bit encoded value.

## BIT

0 = Holiday - Non-work day

1 = Vacation - The calendar owner is on vacation.

2 = Offsite - The calendar owner is not at the normal work location and is unavailable.

3 = Onsite - The calendar owner is not at the normal work location, but is onsite.

4 = Non-Scheduled Time - Provides the means to transmit open time on a calendar.

5 = Date and Time Only - The entry is private and only date and time are provided.

6 = A confirmed meeting (attending) is scheduled for this time.

7 = A confirmed meeting (may attend) is scheduled for this time.

8 = A tentative meeting is scheduled for this time.

9 = A confirmed appointment (attending) is scheduled for this time.

10 = A confirmed appointment (may attend) is scheduled for this time.

11 = Calendar Note - The calendar entry contains character data.

12 = Trigger - The calendar entry is a trigger.

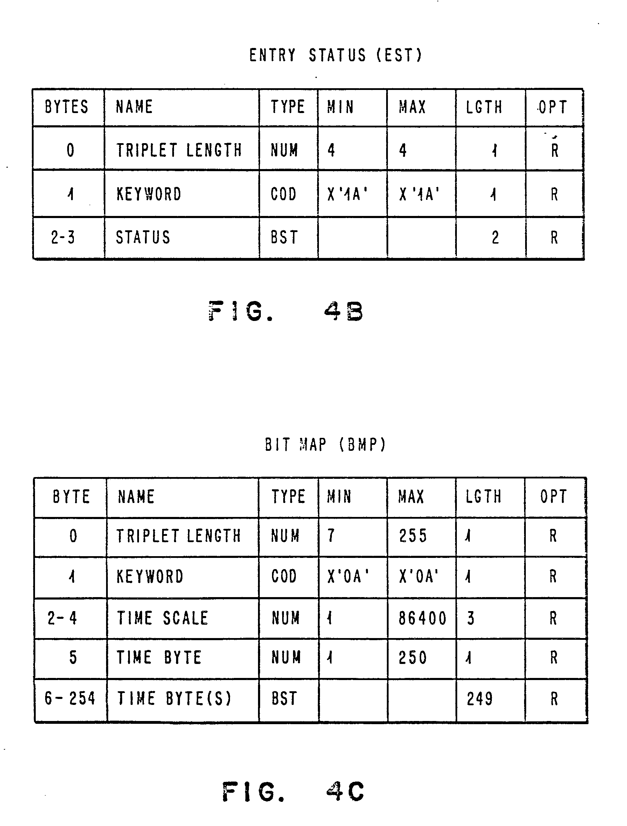

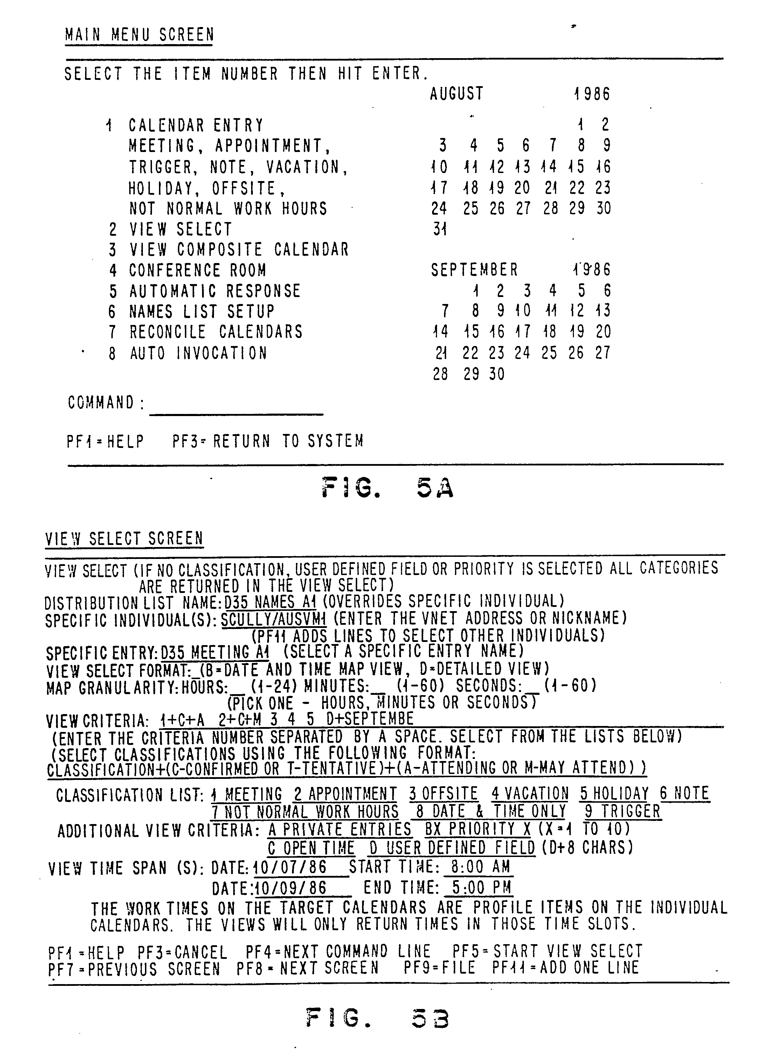

Fig. 4c shows the structure of the BMP triplet. The BMP triplet provides a manner to summarise calendar data for use in the Date and Time Bit Map.

## BMP Parameters

- TIME SCALE: The time increment carried in the bit map.
- TIME BYTE LENGTH: The number of time bytes required to define the time span.
- TIME BYTE: Each bit location in the Time Byte represents a time span equal to the Time Scale.

Bit zero represents the time span immediately after the Begin Time. A new Time Scale, Time Byte Length and Time Byte are required each time the Entry Status changes. This requires the use of a new BMP triplet in response to a status change in the Date and Time Bit Map structured field.

Other calendar structures and calendar triplets which are used are disclosed in EP-A-0 276 427.

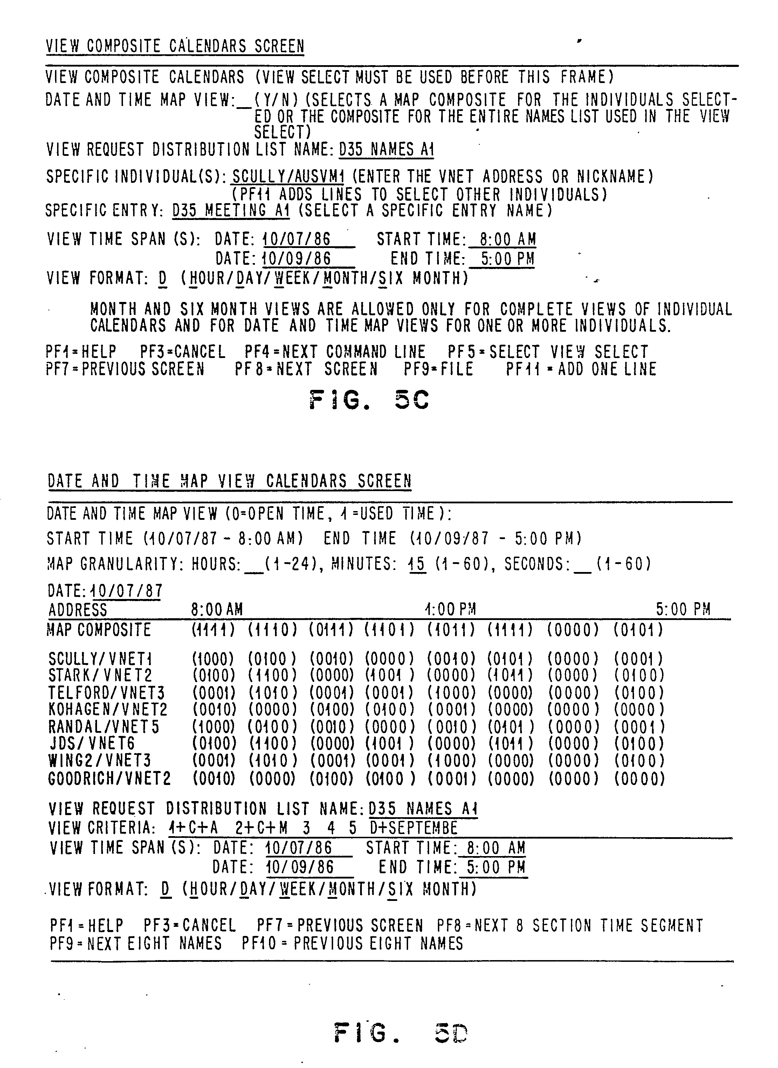

Fig. 5a shows a main menu screen which is displayed to an operator/calendar owner in response to the owner indicating to the system that a calendar function is to be performed. Upon the display of the main menu screen, the operator selects one of a plurality of functions displayed on the screen. The operator selects the function which pertains to the generation of a composite calendar. Therefore, the operator first selects a View Select function either by entering the numeral associated with the function View Select and pressing an enter key (not shown) on the keyboard 17 or by positioning a cursor adjacent to the function View Select on the display 16 and pressing the enter key.

In response to the selection of the View Select function, the system to which the operator is assigned invokes the appropriate application program, the first effect of which is to display the view select screen shown in Fig. 5b. The operator then enters a name of a distribution list, one or more names of specific individuals or a specific event or entry upon which are to be utilised in the generation of the composite calendar. The operator subsequently selects a view select format in which the composite calendar is to be displayed. There are two view select formats from which the operator may select. A date and time map view format facilitates the display of the composite calendar using a plurality of bits which indicates whether a selected one of a plurality of events or a logical combination thereof is scheduled for a given time slot. A detailed view format facilitates the display of the composite calendar using the exact events scheduled for the given time slot. The operator must then enter an indication of granularity of the time which the composite calendar is to be displayed such as hours, minutes or seconds. A view criteria is then selected which facilitates the displaying of an indication of the scheduling or non-scheduling of the plurality events or the logical combination thereof. The operator also enters a view time span for the composite calendar to be generated. After the operator has entered all of the above-identified information, the operator initiates the execution of the view select process by pressing an appropriate function key indicated at the bottom of the view select screen. The system then re-displays the main menu screen shown in Fig. 5a while it executes the view select process in the generation of the composite calendar.

The information processing system connected to the operator's terminal then executes the view select process if all of the parameters are stored thereon and generates a time and bit map. The time and bit map facilitates the generation of the composite calendar by the system. If some or all of the parameters are stored on a remote system, a calendar object structure is transmitted to the remote system for processing. The calendar object structure includes the parameters, the view select format, the time granularity, the view criteria and the time span. After the remote system has processed the calendar object, a time and bit map is generated and transmitted by the remote system to system which generated the calendar object. Thereafter, the system combines the information generated thereby and the information generated by the remote system in generating the composite calendar.

In order to view the composite calendar, the operator must select a View Composite Calendar function displayed on the main menu screen. The system responds to the selection of the View Composite Calendar function with a view composite calendar screen shown in Fig. 5c. The operator then indicates whether a date and time map is to be selected, the name of the distribution list or name or names of the specific individuals or the specific event or entry entered on the view select screen, the time span and a view format on the view composite calendar screen. The operator then selects an appropriate function key, such as PF5, displayed on the screen to facilitate the display of the date and time map screen shown in Fig. 5d.

Shown in Fig. 5d is the date and time map view calendar screen which sets forth the composite calendar. The date and time map view calendar screen utilises the binary digits or bits 1 and 0 to show the open times and the used times, respectively, in the composite calendar. The date and time map view calendar screen also displays the granularity of the time slots in the time span. For purposes of illustration, the time slots in Fig. 5d is shown in fifteen-minute increments. As noted above, the granularity was entered on the view select screen shown in Fig. 5b. The date and time map view calendar screen displays the first day of the time span. If the operator wants to view the date and time span for subsequent days in the time span, the operator presses an appropriate one of the function keys displayed on the date and time map view calendar screen. Moreover, if there are additional names included the composite calendar which are not displayed, the operator presses an appropriate one of the function keys to facilitate the display of the additional names.

Set out below is an illustration of a program for generating the composite calendar. The program is in program design language from which source code and machine code are derivable.

```
COMPOSITE CALENDAR PROC

        DO SELECT THE MAIN MENU ITEM 2

        DO SELECT EITHER DISTRIBUTION LIST NAME OR

                INDIVIDUAL NAMES FOR THE CALENDARS TO BE

                ACCESSED

        DO SELECT A SPECIFIC ENTRY OR EVENT

        DO SELECT VIEW FORMAT

        DO SELECT THE DATE AND TIME MAP GRANULARITY

        DO SELECT THE VIEW CRITERIA FOR THE INFORMATION

                TO BE REPRESENTED IN THE VIEW

        DO SELECT THE VIEW TIME SPAN(S)

        IF ALL REQUIRED ITEMS ARE SELECTED

                THEN BEGIN VIEW SELECT PROCESS

        ENDIF

        IF THE INDIVIDUAL IS LOCAL

                THEN INITIATE A LOCAL VIEW REQUEST

                        ELSE INITIATE A REMOTE VIEW REQUEST

                IF THE REQUEST IS A DATE AND TIME MAP
```

6

```
                                    REQUEST
                                    THEN STORE ALL LOCAL ADDRESSES, SEARCH
                                            EACH ADDRESSED CALENDAR FOR THE
                                            REQUESTED INFORMATION, BUILD ALL
                                            DATE AND TIME MAP CALENDAR
                                            STRUCTURE FOR EACH ADDRESSED
                                            INDIVIDUAL AND GENERATE TIME AND
                                            BIT MAP FOR EACH INDIVIDUAL AND
                                            RETURN TO REQUESTING SYSTEM
                                    ENDIF
                            ENDIF
                    IF ONE OR MORE DATE AND TIME MAPS HAVE BEEN RETURNED
                            THEN SELECT MAIN MENU ITEM 3
                            DO SELECT EITHER INDIVIDUAL NAMES OR A
                                    DISTRIBUTION LIST NAME FOR THE CALENDAR
                                    ACCESSED
                            DO SELECT A SPECIFIC ENTRY NAME OR EVENT
                            DO SELECT THE VIEW TIME SPAN(S)
                            DO SELECT THE VIEW FORMAT
                            IF ALL REQUIRED ITEMS ARE SELECTED
                                    THEN SELECT DATE AND TIME MAP VIEW SCREEN
                            ENDIF
                    ENDIF
```

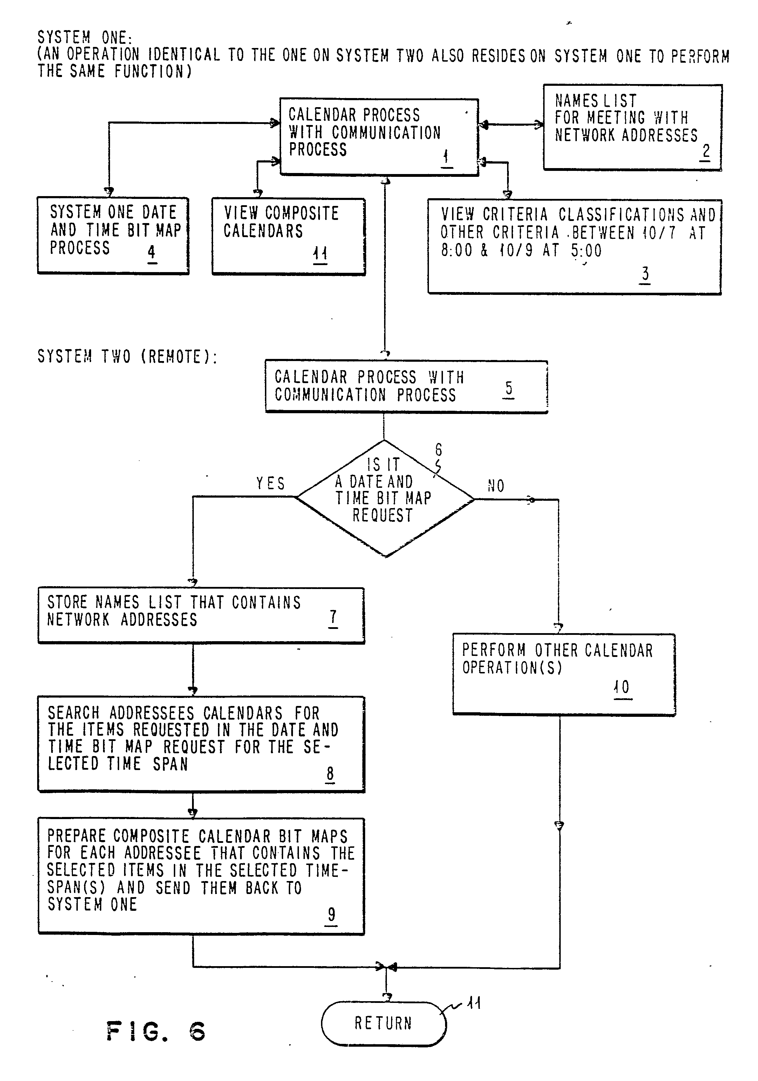

Fig. 6 sets forth the steps flow diagram of a composite generation process. This chart assumes that at least one calendar to be included in the composite calendar to be generated is remotely connected to the host system which processes the calendar of the operator initiating the composite generating process. In the case of a calendar being resident on a remote system, it will be assumed that the remote system employs the same calendar architecture that is employed by the operator's system or that a suitable data interchange arrangement exists between the two systems to permit processing calendar objects.

It is assumed in Fig. 6 that the composite calendar generation process is for specified scheduled events between 10/07 and 10/09 within the time span of 8:00a.m. on the 7th and 5:00p.m. on the 9th. The calendar process represented by block 1 interacts with the view criteria in block 3 in order to determine how to select the composite view from the calendars of the individuals whose names and address appear on the Name List represented by block 2. Additionally, the calendar process determines from the items listed as the view criteria what to request and then builds a date and time bit map structure with the selected view criteria. For purposes of illustration, the view criteria as set forth on the view select screen shown in Fig. 5b is (1) confirmed meeting attending, (2) confirmed appointments may attend, (3) offsite, (4) vacation, (5) holidays, and (6) a user defined field "September" during the time span indicated on the view select screen. The calendar process on System 1 then determines the address of the individual calendars to be search by reference to block 2, the process is started for the local system by reference to block 4 and then transmits a calendar object containing the date and time map structure along with a names list structure which contains individual network addresses to the remote system, e.g. System 2.

System 2 receives the calendar object in block 5 and acknowledges the receipt to System 1 and then initiates the processing of the calendar object. System 2 in processing the calendar object performs a search of the selected calendar according to the view criteria selected. The calendar process on System 2 is substantially the same as the process on System 1 except that a different set of calendars are searched during the process.

If the calendar object transmitted by System 1 to System 2 was not a date and time bit map request, control is transferred from block 6 to block 10 so that System 2 can perform the requested calendar function. Thereafter, control is returned through block 5 to block 1.

If the calendar object transmitted by System 1 to System 2 was a date and time bit map request, control is transferred from block 6 to block 7. Addresses which are associated with the names list transmitted from System 1 are then generated. These addresses tells System 2 where the associated calendars are located. The associated calendars are then searched in block 8 for the specified scheduled appointments, meetings, vacation, holidays and offsite. As each of the associated calendars are searched, a composite calendar which includes only the bit representation of the calendar data is built in block 9. As noted above, the bit representation set forth the classifications selected on the view select screen for the time span indicted thereon. System 2 then transmits the date and time bit map calendar data for each of the calendars searched to System 1 through block 5.

System 1 then invokes block 11 to facilitate the display of the generated composite calendar. The operator then selects the view select function from the view composite calendar screen shown in Fig. 5c. As shown in Fig. 5d, the first day of the generated composite calendar is displayed. The operator can display the additional days in the time span or additional names in the composite calendar by selecting the appropriate function displayed on the screen.

## Claims

1. A method of interrogating electronic calendars in a data processing system which supports an application program driven user interface and a potential plurality of calendars, the method being driven by a calendar interrogation application program and comprising:
in response to the invocation of the calendar interrogation program, presenting at the user interface a choice of interrogation formats;
in response to the choosing of one of the presented formats, presenting at the user interface a choice of calendar parameters to be involved in the interrogation and a choice of the time granularity under which the interrogation is to take place;
in response to the selection of parameters and granularity, automatically compiling an interrogation request appropriate to the format, parameters and granularity to each supported calendar;
in response to the execution of the interrogation requests, accumulating the response data into the selected format to form a composite calendar structure and presenting the same at the user interface.

2. A method as claimed in claim 1, the system supporting individually identifiable calendars, wherein a selectable parameter is calendar identity and only identified calendars are interrogated.

3. A method as claimed in either preceding claim, wherein at least some of the selectable formats, assuming the interrogated calendar set includes a sufficiency of entries, will produce composite calendar structures which include entries from each of the interrogated calendars and logical combinations of such entries.

4. A method as claimed in claim 3, wherein at least some of the selectable formats result in each entry in the composite calendar structure is represented by a single digit for each time frame represented by selected granularity.

5. A method as claimed in any preceding claim, wherein a selectable calendar parameter is a specific event capable of being represented in the supported calendars.

6. A method as claimed in any preceding claim, wherein a selectable parameter is the time span, relative to the supported calendars, over which the interrogation is to be effective.

7. A method as claimed in any preceding claim, where the system includes plural interconnected processors each independently supporting potential calendars, including transmitting the compiled interrogation request from the originating processor to the remaining processors for execution thereat, such processors accumulating their respective contributions into the selected format and transmitting the same back to the originating processor for further accumulation and presentation.

8. A method as claimed in any of claims 1 to 6, where the system includes plural interconnected processors each independently supporting potential calendars, including transmitting the compiled interrogation request from the originating processor to the remaining processors for execution thereat, such processors transmitting their respective contributions by selected supported calendar back to the originating processor for accumulation and presentation.

FIG. 1

FIG. 2

DATE AND TIME BIT MAP (DTB)

| BYTES | NAME | TYPE | MIN | MAX | LGTH | OPT |
|-------|------|------|-----|-----|------|-----|
| 0 - 1 | STRUCTURED FIELD LENGTH | NUM | 21 | 32767 | 2 | R |
| 2 | STRUCTURED FIELD TYPE1 | COD | X'D3' | X'D3' | 1 | R |
| 3 | STRUCTURED FIELD TYPE2 | COD | X'7A' | X'7A' | 1 | R |
| 4 - 32767 | DTB TRIPLETS | | | | | R |

## FIG. 3

DATE AND TIME (DTM)

| BYTES | NAME | TYPE | MIN | MAX | LGTH | OPT |
|-------|------|------|-----|-----|------|-----|
| 0 | TRIPLET LENGTH | NUM | 6 | 255 | 1 | R |
| 1 | KEYWORD | COD | X'15' | X'15' | 1 | R |
| 2 - 3 | BEGIN DATE DAY | NUM | 1 | 366 | 2 | R |
| 4 - 5 | BEGIN DATE YEAR | NUM | -4095 | 4095 | 2 | R |
| 6 - 8 | BEGIN TIME | NUM | 0 | 86399 | 3 | O |
| 9 - 10 | END DATE DAY | NUM | 1 | 366 | 3 | O |
| 11 - 12 | END DATE YEAR | NUM | -4095 | 4095 | 2 | O |
| 13 - 15 | END TIME | NUM | 0 | 86399 | 3 | O |
| 12 - 255 | ADDITIONAL DATE TIME COMBINATIONS | | | | | |

## FIG. 4A

ENTRY STATUS (EST)

| BYTES | NAME | TYPE | MIN | MAX | LGTH | OPT |
|-------|------|------|-----|-----|------|-----|
| 0 | TRIPLET LENGTH | NUM | 4 | 4 | 1 | R |
| 1 | KEYWORD | COD | X'1A' | X'1A' | 1 | R |
| 2-3 | STATUS | BST | | | 2 | R |

FIG. 4B

BIT MAP (BMP)

| BYTE | NAME | TYPE | MIN | MAX | LGTH | OPT |
|------|------|------|-----|-----|------|-----|
| 0 | TRIPLET LENGTH | NUM | 7 | 255 | 1 | R |
| 1 | KEYWORD | COD | X'0A' | X'0A' | 1 | R |
| 2-4 | TIME SCALE | NUM | 1 | 86400 | 3 | R |
| 5 | TIME BYTE | NUM | 1 | 250 | 1 | R |
| 6-254 | TIME BYTE(S) | BST | | | 249 | R |

FIG. 4C

MAIN MENU SCREEN
_____

SELECT THE ITEM NUMBER THEN HIT ENTER.

                                        AUGUST          1986

    1  CALENDAR ENTRY                                      1  2
       MEETING, APPOINTMENT,          3   4   5   6   7   8  9
       TRIGGER, NOTE, VACATION,       10  11  12  13  14  15 16
       HOLIDAY, OFFSITE,              17  18  19  20  21  22 23
       NOT NORMAL WORK HOURS          24  25  26  27  28  29 30
    2  VIEW SELECT                    31
    3  VIEW COMPOSITE CALENDAR
    4  CONFERENCE ROOM                SEPTEMBER       1986
    5  AUTOMATIC RESPONSE                  1   2   3   4   5  6
    6  NAMES LIST SETUP               7   8   9   10  11  12 13
    7  RECONCILE CALENDARS            14  15  16  17  18  19 20
    8  AUTO INVOCATION                21  22  23  24  25  26 27
                                      28  29  30

  COMMAND :  _____


  PF1=HELP    PF3= RETURN TO SYSTEM
_____

# FIG. 5A


VIEW SELECT SCREEN
_____
VIEW SELECT (IF NO CLASSIFICATION, USER DEFINED FIELD OR PRIORITY IS SELECTED ALL CATEGORIES
        ARE RETURNED IN THE VIEW SELECT)
DISTRIBUTION LIST NAME:D35 NAMES A1 (OVERRIDES SPECIFIC INDIVIDUAL)
SPECIFIC INDIVIDUAL(S):SCULLY/AUSVM1 (ENTER THE VNET ADDRESS OR NICKNAME)
                   (PF11 ADDS LINES TO SELECT OTHER INDIVIDUALS)
SPECIFIC ENTRY:D35 MEETING A1  (SELECT A SPECIFIC ENTRY NAME)
VIEW SELECT FORMAT: (B=DATE AND TIME MAP VIEW, D=DETAILED VIEW)
MAP GRANULARITY:HOURS: __ (1-24) MINUTES: __ (1-60) SECONDS: __ (1-60)
                (PICK ONE - HOURS, MINUTES OR SECONDS)
VIEW CRITERIA: 1+C+A  2+C+M  3  4  5  D+SEPTEMBE
(ENTER THE CRITERIA NUMBER SEPARATED BY A SPACE. SELECT FROM THE LISTS BELOW)
(SELECT CLASSIFICATIONS USING THE FOLLOWING FORMAT:
CLASSIFICATION+(C-CONFIRMED OR T-TENTATIVE)+(A-ATTENDING OR M-MAY ATTEND) )

 CLASSIFICATION LIST: 1 MEETING  2 APPOINTMENT  3 OFFSITE  4 VACATION  5 HOLIDAY  6 NOTE
                7 NOT NORMAL WORK HOURS  8 DATE & TIME ONLY  9 TRIGGER
 ADDITIONAL VIEW CRITERIA: A PRIVATE ENTRIES  BX PRIORITY X (X=1 TO 10)
                    C OPEN TIME  D USER DEFINED FIELD (D+8 CHARS)
VIEW TIME SPAN (S): DATE:10/07/86   START TIME: 8:00 AM
                DATE:10/09/86    END TIME: 5:00 PM
   THE WORK TIMES ON THE TARGET CALENDARS ARE PROFILE ITEMS ON THE INDIVIDUAL
   CALENDARS. THE VIEWS WILL ONLY RETURN TIMES IN THOSE TIME SLOTS.

PF1=HELP PF3=CANCEL  PF4=NEXT COMMAND LINE  PF5= START VIEW SELECT
PF7=PREVIOUS SCREEN  PF8= NEXT SCREEN   PF9=FILE  PF11=ADD ONE LINE
_____

# FIG. 5B

EP 0 323 703 A2

VIEW COMPOSITE CALENDARS SCREEN

---

VIEW COMPOSITE CALENDARS (VIEW SELECT MUST BE USED BEFORE THIS FRAME)
DATE AND TIME MAP VIEW:__(Y/N) (SELECTS A MAP COMPOSITE FOR THE INDIVIDUALS SELECT-
ED OR THE COMPOSITE FOR THE ENTIRE NAMES LIST USED IN THE VIEW
SELECT)
VIEW REQUEST DISTRIBUTION LIST NAME: D35 NAMES A1

SPECIFIC INDIVIDUAL(S): SCULLY/AUSVM1 (ENTER THE VNET ADDRESS OR NICKNAME)
(PF11 ADDS LINES TO SELECT OTHER INDIVIDUALS)
SPECIFIC ENTRY: D35 MEETING A1 (SELECT A SPECIFIC ENTRY NAME)

VIEW TIME SPAN (S):  DATE: 10/07/86    START TIME: 8:00 AM
DATE: 10/09/86    END TIME: 5:00 PM
VIEW FORMAT: D (HOUR/DAY/WEEK/MONTH/SIX MONTH)

MONTH AND SIX MONTH VIEWS ARE ALLOWED ONLY FOR COMPLETE VIEWS OF INDIVIDUAL
CALENDARS AND FOR DATE AND TIME MAP VIEWS FOR ONE OR MORE INDIVIDUALS.

PF1=HELP   PF3=CANCEL   PF4=NEXT COMMAND LINE   PF5=SELECT VIEW SELECT
PF7=PREVIOUS SCREEN    PF8=NEXT SCREEN   PF9=FILE    PF11=ADD ONE LINE

## FIG. 5C

DATE AND TIME MAP VIEW CALENDARS SCREEN

---

DATE AND TIME MAP VIEW (0=OPEN TIME, 1=USED TIME):
START TIME (10/07/87 - 8:00 AM)   END TIME (10/09/87 - 5:00 PM)
MAP GRANULARITY: HOURS: __(1-24), MINUTES: 15 (1-60), SECONDS: __ (1-60)

DATE: 10/07/87

| ADDRESS | 8:00 AM | | | | 1:00 PM | | | 5:00 PM |
|---|---|---|---|---|---|---|---|---|
| MAP COMPOSITE | (1111) | (1110) | (0111) | (1101) | (1011) | (1111) | (0000) | (0101) |
| | | | | | | | | |
| SCULLY/VNET1 | (1000) | (0100) | (0010) | (0000) | (0010) | (0101) | (0000) | (0001) |
| STARK/VNET2 | (0100) | (1100) | (0000) | (1001) | (0000) | (1011) | (0000) | (0100) |
| TELFORD/VNET3 | (0001) | (1010) | (0001) | (0001) | (1000) | (0000) | (0000) | (0100) |
| KOHAGEN/VNET2 | (0010) | (0000) | (0100) | (0100) | (0001) | (0000) | (0000) | (0000) |
| RANDAL/VNET5 | (1000) | (0100) | (0010) | (0000) | (0010) | (0101) | (0000) | (0001) |
| JDS/VNET6 | (0100) | (1100) | (0000) | (1001) | (0000) | (1011) | (0000) | (0100) |
| WING2/VNET3 | (0001) | (1010) | (0001) | (0001) | (1000) | (0000) | (0000) | (0100) |
| GOODRICH/VNET2 | (0010) | (0000) | (0100) | (0100) | (0001) | (0000) | (0000) | (0000) |

VIEW REQUEST DISTRIBUTION LIST NAME: D35 NAMES A1
VIEW CRITERIA: 1+C+A  2+C+M  3  4  5  D+SEPTEMBE
VIEW TIME SPAN (S):  DATE: 10/07/86    START TIME: 8:00 AM
DATE: 10/09/86    END TIME: 5:00 PM
VIEW FORMAT: D (HOUR/DAY/WEEK/MONTH/SIX MONTH)

PF1=HELP   PF3=CANCEL   PF7=PREVIOUS SCREEN  PF8=NEXT 8 SECTION TIME SEGMENT
PF9=NEXT EIGHT NAMES   PF10=PREVIOUS EIGHT NAMES

---

## FIG. 5D

SYSTEM ONE:
(AN OPERATION IDENTICAL TO THE ONE ON SYSTEM TWO ALSO RESIDES ON SYSTEM ONE TO PERFORM THE SAME FUNCTION)

CALENDAR PROCESS WITH COMMUNICATION PROCESS  _1_

NAMES LIST FOR MEETING WITH NETWORK ADDRESSES  _2_

SYSTEM ONE DATE AND TIME BIT MAP PROCESS  _4_

VIEW COMPOSITE CALENDARS  _11_

VIEW CRITERIA CLASSIFICATIONS AND OTHER CRITERIA BETWEEN 10/7 AT 8:00 & 10/9 AT 5:00  _3_

SYSTEM TWO (REMOTE):

CALENDAR PROCESS WITH COMMUNICATION PROCESS  _5_

IS IT A DATE AND TIME BIT MAP REQUEST  _6_

YES

NO

STORE NAMES LIST THAT CONTAINS NETWORK ADDRESSES  _7_

PERFORM OTHER CALENDAR OPERATION(S)  _10_

SEARCH ADDRESSEES CALENDARS FOR THE ITEMS REQUESTED IN THE DATE AND TIME BIT MAP REQUEST FOR THE SELECTED TIME SPAN  _8_

PREPARE COMPOSITE CALENDAR BIT MAPS FOR EACH ADDRESSEE THAT CONTAINS THE SELECTED ITEMS IN THE SELECTED TIME-SPAN(S) AND SEND THEM BACK TO SYSTEM ONE  _9_

RETURN  _11_

FIG. 6